# EUROPEAN PATENT SPECIFICATION

(11) **EP 4 250 095 B1**
(45) Date of publication and mention of the grant of the patent: **03.12.2025**
(21) Application number: 23163150.8
(22) Date of filing: 21.03.2023
(51) Int. Cl.: G06F 8/71, G06F 21/10

(54) **SOFTWARE ARTIFACT MANAGEMENT ACROSS ENVIRONMENTS**
SOFTWAREARTEFAKTVERWALTUNG ÜBER UMGEBUNGEN HINWEG
GESTION D'ARTEFACTS LOGICIELS DANS DES ENVIRONNEMENTS

(30) Priority: 22.03.2022 US 202217701085
(43) Date of publication of application: 27.09.2023
(73) Proprietor: Juniper Networks, Inc., Sunnyvale, CA 94089 (US)
(72) Inventor: THRUN, Christian, Sunnyvale, 94089 (US); NAVAS, Ignacio Suarez, Sunnyvale, 94089 (US); PIANIGIANI, Jacopo, Sunnyvale, 94089 (US); BALASUBRAMANIAN, Anatha Padmanabhan Chebium, Sunnyvale, 94089 (US); LNU, Aayusi, Sunnyvale, 94089 (US); SMEUREANU, Alexandru, Sunnyvale, 94089 (US); BRASOV, Adrian Ioan, Sunnyvale, 94089 (US); PAJIN, Dusan, Sunnyvale, 94089 (US)
(74) Representative: D Young & Co LLP

(56) References cited:
- US-A1- 2017 124 073
- US-A1- 2021 132 925

## Description

This application claims the benefit of US Patent Application Publication US 2023/334143 A1, filed 22 March 2022.

### TECHNICAL FIELD

The present disclosure relates to computing devices and, more particularly, to software artifact management systems.

### BACKGROUND

Software artifacts may refer to any files created by software development processes, such as packages, containers, configuration files, and/or documents along with any dependencies that may be required to build or deploy an application (such as a base image or an open source package), configuration files, and the like. Software artifact management may involve various systems used to facilitate development, testing, and/or distribution of software artifacts.

Software artifact management systems may maintain a central repository to which all software artifacts are published. The central repository may include software artifacts from a number of different vendors to facilitate a number of different use cases, such as software development, testing, and/or distribution. While the vendors may easily publish software artifacts for a particular edge repository associated with a particular environment, the software artifact management system may experience issues when attempting to move the software artifacts between edge repositories associated with different environments.

US 2021/132925 A1 relates to systems and methods for implementing a software provisioning agent residing in a trusted execution environment. An example method comprises: receiving, by a software provisioning agent residing in a trusted execution environment (TEE) of a host computer system, a software provisioning command initiated by a software provisioning controller, wherein the software provisioning command identifies a target software application; receiving a file associated with the target software application; and performing, using the file, a software provisioning operation with respect to the target software application..

US 2017/124073 A1 relates to a system and method of code migration using distributed file system directories. A computing device may send, to a code repository, a request to migrate code. The request may include, for example, an identifier for the code. In response to the request, the computing device may receive, from the code repository, the code. The computing device may generate one or more directories for the code. The computing device may migrate the code to the one or more directories. The code and the one or more directories may be synchronized to one or more other computing devices.

### SUMMARY

Particular aspects are set out in the appended independent claims. Various optional embodiments are set out in the dependent claims.

Techniques are described for facilitating software artifact management across environments. Environments may refer to different aspects of software development, such as a test (or, in other words, lab) environment and a production environment. A test environment may allow software developers to test (via a test bench, which may represent a simulated production environment) software artifacts to ensure proper operation of the software artifacts prior to being deployed to the actual live environments, which may also be referred to as the production

environment. To preserve security in each environment and ensure that untested software artifacts cannot be inadvertently deployed between environments, many environments include various security measures (in terms of network security devices, such as firewalls, network address translation devices, intrusion detection prevention devices, etc.) to prevent distribution of software artifacts across environments unless explicitly authorized by network administrators, software developers, and other users.

The techniques described in this disclosure may allow for automated deployment of software artifacts across secure environments through use, at least in part, of a distribution controller that operates with respect to declarative and intent-based rules referred to as environmental descriptors. The environmental descriptors identify software artifacts that are to be stored by edge repositories associated with different environments, thereby preserving edge repository state that facilitates error recovery, while also providing the user with a declarative, intent-based rule base by which to automate software artifact distribution across environments.

Rather than manually direct the software artifact management system to distribute software artifacts from the central repository, the user may define environmental descriptors to gate distribution of software artifacts. The distribution controller may, based on the environmental descriptors, automatically interface with the central repository to distribute the software artifact to the edge repository. As the environmental descriptors are human-readable, the automated process may thereby be documented to facilitate troubleshooting and potentially allow for rapid understanding of the state of the edge repositories across environments. When moving between environments, the distribution controllers (in one or more environments) may cooperate to transfer the software artifact from the central repository to the next software environment (e.g., moving from the test environment to the production environment).

As such, various aspects of the techniques described in this disclosure may improve operation of software artifact management systems using the distribution controller to automate software artifact distribution across environments by way of the central repository. The automated nature by which the distribution controller may interface with the central repository to trigger delivery (or, in other words, distribution) of the software artifacts to different environments may reduce the likelihood of human error, while also potentially enabling the preservation of security for each environment (as the distribution controller may operate as an authorized agent in directing distribution of software artifacts from the central repository).

Furthermore, the declarative, intent-based rule base by which environmental descriptors are defined may improve traceability for distribution of software artifact while also potentially providing a defined state by which the distribution controllers may recover from errors in the various environments. In the instance of an error that corrupts edge repositories, the distribution controller may, based on the environmental descriptors, automatically recover from such error by automatically triggering redistribution of software artifacts to the edge repositories of the various environments.

In this respect, the various aspects of the techniques may improve operation of software artifact management systems themselves by potentially reducing human error, promoting automated error recovery, supporting software artifact documentation, increasing security, etc. By reducing human error that may result in additional steps to correct such error, automating error recovery to again avoid inadvertent processes, supporting software artifact documentation (via environmental descriptors), and increasing security, the various aspects of the techniques may reduce consumption of computing resources (such as processor cycles, memory, memory bus bandwidth, etc., and associated power consumption).

In one aspect, various aspects of the techniques are directed to a method comprising: storing, by a memory of a distribution controller supporting a software artifact management system, an environmental descriptor that identifies one or more software artifacts stored to a central repository located in an unsecure environment; generating, by one or more processors of the distribution controller and based on the environmental descriptor, one or more distribution operations specifying that at least one software artifact of the one or more software artifacts is to be distributed to a secure environment separate from the unsecure environment; and transmitting, by the one or more processors and to the central repository, the one or more distribution operations to cause the central repository to transfer the at least one software artifact to an edge repository in the secure environment.

In another aspect, various aspects of the techniques are directed to a distribution controller configured to support a software artifact management system, the distribution controller comprising: a memory configured to store an environmental descriptor that identifies one or more software artifacts stored to a central repository located in an unsecure environment; and one or more processors configured to generate, based on the environmental descriptor, one or more distribution operations specifying that at least one software artifact of the one or more software artifacts is to be distributed to a secure environment from the unsecure environment; and transmit, to the central repository, the one or more distribution operations to cause the central repository to transfer the at least one software artifact to the edge repository in the secure environment.

In another aspect, various aspects of the techniques are directed to a computer-readable medium comprising instructions that, when executed, cause one or more processors of a distribution controller supporting a network artifact management system to: store an environmental descriptor that identifies one or more software artifacts stored to a central repository located in an unsecure environment; generate, based on the environmental descriptor, one or more distribution operations specifying that at least one software artifact of the one or more software artifacts is to be distributed to a secure environment separate from the unsecure environment; and transmit, to the central repository, the one or more distribution operations to cause the central repository to transfer the at least one software artifact to an edge repository in the secure environment.

In another aspect, various aspects of the techniques are directed to a software artifact management system comprising: a central repository residing in an unsecure environment and configured to store a plurality of software artifacts; an edge repository residing in a secure environment; and a distribution controller comprising: a memory configured to store an environmental descriptor that identifies one or more software artifacts of the plurality of software artifacts stored to the central repository; and one or more processors configured to generate, based on the environmental descriptor, one or more distribution operations specifying that at least one software artifact of the one or more software artifacts is to be distributed to the edge repository from the central repository; and transmit, to the central repository, the one or more distribution operations to cause the central repository to transfer the at least one software artifact to the edge repository in the secure environment.

The details of one or more aspects of the techniques are set forth in the accompanying drawings and the description below. Other features, objects, and advantages of the techniques will be apparent from the description and drawings, and from the claims.

### BRIEF DESCRIPTION OF DRAWINGS

FIGS. 1A and 1B are block diagrams of an example software artifact management system configured to perform various aspects of the inter-environment software artifact management techniques described in this disclosure.
FIGS. 2A and 2B are block diagrams of another example software artifact management system configured to perform various aspects of the inter-environment software artifact management techniques described in this disclosure.
FIG. 3 is a flowchart illustrating example operation of the distribution controller of FIGS. 1A and 1B in performing various aspects of the software artifact management techniques described in this disclosure.
FIG. 4 is a block diagram illustrating further details of one example of a computing device that operates in accordance with one or more techniques of the present disclosure.

### DETAILED DESCRIPTION

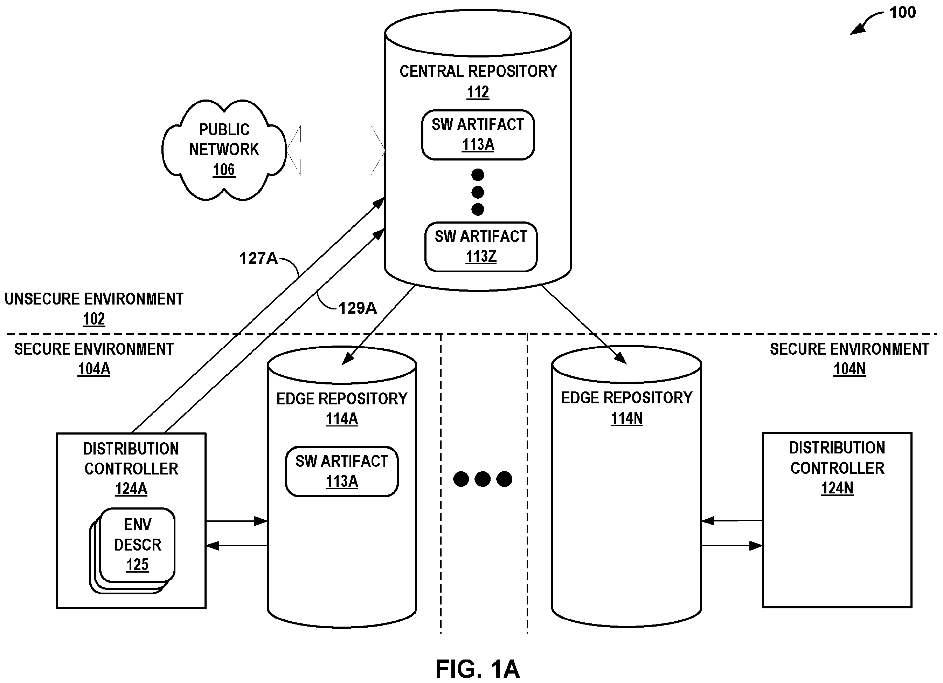

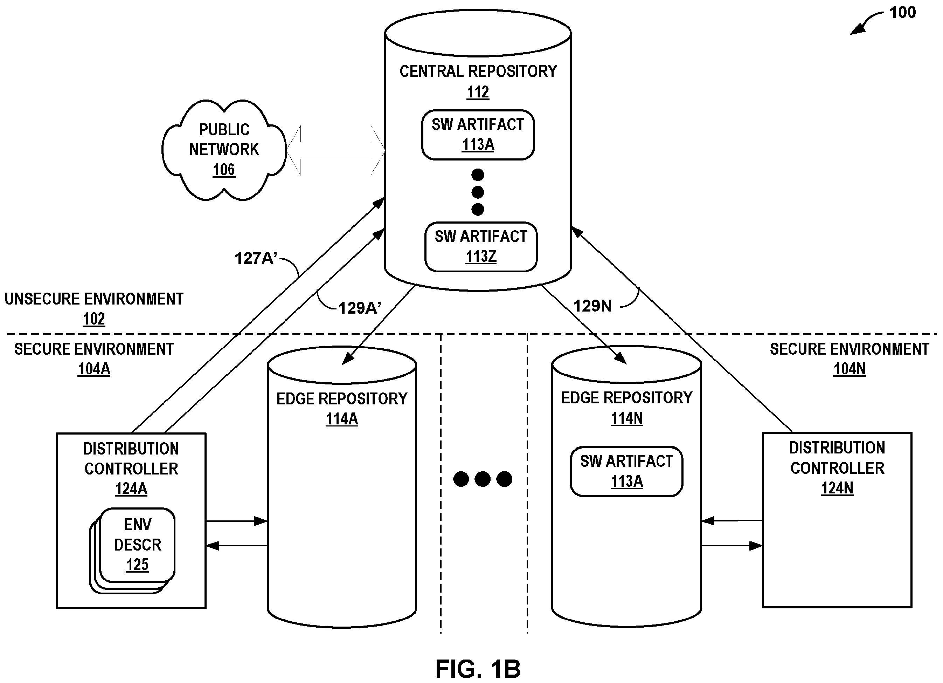

FIGS. 1A and 1B are block diagrams of an example software artifact management system 100 configured to perform various aspects of the inter-environment software artifact management techniques described in this disclosure. As shown in the example of FIG. 1A, software artifact management system 100 manages software artifacts across a number of different environments 102 and 104A-104N. Environment 102 may represent an unsecured environment that is directly accessible via a public network 106 (such as the Internet). As such, environment 102 may be referred to as "unsecured environment 102." Environment 102 may also be, given there is public access to central repository 112 via public network 106, be referred to as "public environment 102."

Environments 104A-104N may represent environments that are protected from direct access via a public network. These environments 104A-104N may be secured by way of one or more firewalls, intrusion detection prevention (IDP) devices, network address translation (NAT) devices, and/or other network security devices that attempt to prevent direct access from public network 106 unless in some instances such access is authenticated. Environments 104A-104N may therefore be referred to as secure environments 104A-104N ("secure environments 104").

As further shown in the example of FIG. 1A, software artifact management system 100 includes a central repository 112 located in unsecure environment 102, and edge repositories 114A-114N ("edge repositories 114") located in respective secure environments 104. Central repository 112 may store software (SW) artifacts 113A-113Z ("SW artifacts 113"). SW artifacts 113 may refer to any files created by software development processes, such as packages, containers, configuration files, and/or documents along with any dependencies that may be required to build or deploy an application (such as a base image or an open source package), configuration files, and the like. Software artifact management may involve various systems used to facilitate development, testing, and/or distribution of software artifacts, such as software management system 100.

While described with respect to unsecure environment 102, environment 102 may not represent other types of environments, such as a secure environment in the sense that environment 102 may provide firewall and other network security to ensure malicious code is unable to be deployed within environment 102. In this context, the difference between environment 102 and environments 104 is that environment 102 may be publicly accessible from public network 106 while secure environments 104 may represent private networks that are not publicly accessible from public network 106. As such, environment 102 may also be referred to as "public environment 102," while environments 104 may be referred to as "private environments 104."

Central repository 112 may represent any type of computer-readable media, including databases supported by non-volatile memory such as storage drives (e.g., hard drives, disc drives, tape drives, etc.), flash memory and the like, volatile memory (e.g., random access memory - RAM, synchronous RAM - SRAM, dynamic RAM - DRAM), or any other type of storage system having a hierarchical or non-hierarchical configuration capable of storing software artifacts 113. Central repository 112 may also include software by which to control central repository 112, where such software may be similar to a database management system. Edge repositories 114 may each be similar to, if not the same as, central repository 112 in terms of representing any type of computer-readable media.

In any event, management of software artifacts 113 is complex because software artifacts 113 may originate from many different sources both inside and outside an organization, where each separate system introduces a potential point of failure due to outages or other issues. For example, a single software artifact of software artifacts 113 may include files that originate from builds across multiple internal teams (meaning, internal to a given organization), open source projects (e.g., in GitHub), and/or format specific sites (as compared to open source sites).

Software artifact management system 100 may address the above complexities and reliability issues by centralizing software artifacts 113 in a single entry point. That is, software artifact management system 100 may maintain central repository 112 to which all SW artifacts 113 are published. Vendors may publish SW artifacts 113 to central repository 112 for a number of different purposes. In some instances, vendors may publish SW artifacts 113 to central repository to facilitate testing and further development of SW artifacts 113 in one or more secure environments 104. Should SW artifacts 113 successfully complete testing, vendors may distribute SW artifacts 113 to another secure environment 104 for, as an example, deployment within a network of one or more secure environments 104.

In this respect, software artifact management system 100 may act as a single source of so-called "truth" and continuous integration and continuous delivery (CI/CD) integration point for software artifacts 113. In addition, software artifact management system 100 may provide additional features, such as version management, vulnerability scanning, and approval workflows. Software artifact management system 100 may further provide unified access control and consistent configuration while also providing consistency in automation for workflows with software artifacts 113.

However, the secure nature of secure environments 104 may prohibit direct communication between secure environments 104. As such, the vendors may attempt to manually trigger distribution of SW artifacts 113 to the different one of secure environments 104, which may by prone to human error. Furthermore, should an error occur within any of secure environments 104 (e.g., failure of storage supporting edge repositories 114), such software artifact management systems 100 may maintain no state of SW artifacts distributed to edge repositories 114 such that there is a way to rebuild distributed SW artifacts 113 at edge repositories 114 (at least in an automated way that is not further prone to human error).

In accordance with various aspects of the techniques described in this disclosure, software artifact management system 100 may facilitate automatic transfer of SW artifacts 113 across secure environments 104 using a declarative and intent-based approach. Software artifact management system 100 may include distribution controllers 124A-124N ("distribution controllers 124") in each of secure environments 104. One or more distribution controllers 124 (e.g., distribution controller 124A) include one or more environmental descriptions 125 ("env descry 125") that maintain the state of edge repositories 114 in terms of which SW artifacts 113 are to be distributed to each of edge repositories 114 from central repository 112.

Distribution controllers 124 may represent a web-based service that operates according to a representational state transfer (REST or, sometimes denoted, RESTful) application programming interface (API) (REST API) that integrates with various systems, including in some instances the CI/CD infrastructure. Although described as a distributed web-service, distribution controllers 124 may also represent dedicated networking devices and/or services running on dedicated servers or other types of network devices capable of performing the operations of distribution controllers 124 described throughout this disclosure.

Environmental descriptors 125 may represent, in other words, human-readable/-writable files that describe a state of secure environments 104 in terms of SW artifacts 113 stored at each edge repository 114. In some instances, distribution controllers 124 may maintain a separate environmental descriptor 125 for each corresponding secure environment 104. In other instances, a single one of environmental descriptors 125 may define the state of multiple secure environments 104. Regardless, environmental descriptors 125 may conform to the JavaScript Object Notation (JSON) format or any other lightweight data-interchange format utilized by webservices, such as distribution controllers 124. Environmental descriptors 125 may be language independent (meaning that JSON or other data-interchange formats are not specific to any underlying programming language such as JavaScript, C, C++, C#, Java, Perl, Python, etc.).

In any event, to redistribute SW artifacts 113 from one secure environment 104 (e.g., secure environment 104A) to another secure environment 104 (e.g., secure environment 104N), the operator (e.g., software developer, network administrator, or some other authorized user) updates environmental descriptors 125 to specify which of SW artifacts 113 are to move between secure environments 104. Once environmental descriptors 125 are updated, distribution controller 124A may automatically interface with central repository 112 to cause central repository 112 to distribute the updated SW artifacts of SW artifacts 113 to a different edge repository 114 (e.g., edge repository 114N). Distribution controller 124A may also issue reports to edge repository 114A regarding which of SW artifacts 113 should be stored at edge repository 114A, which may cause edge repository 114A to remove (or, in other words, delete) the updated SW artifacts that were redistributed from edge repository 114A to edge repository 114N.

In operation, distribution controller 124A may store environmental descriptors 125 that identifies one or more software artifacts 113 stored to central repository 112 located in unsecure environment 102. Distribution controller 124A may maintain environmental descriptors 125 locally (e.g., stored to edge repository 114A) within secure environment 104A. Distribution controller 124A may store environmental descriptors 125 to prevent unauthorized access to environmental descriptors 125 and thereby improve security.

Distribution controller 124A may next generate, based on environmental descriptors 125, one or more distribution operations 127A specifying that at least one SW artifact (e.g., SW artifact 113A) of SW artifacts 113 are to be distributed to secure environment 104A separate from unsecure environment 102. Distribution controller 124A may then transmit, to central repository 112, distribution operations 127A to cause central repository 112 to transfer (or, in other words, distribute) SW artifact 113A to edge repository 114A in secure environment 104A. Central repository 112 may, responsive to receiving distribution operations 117A, distribute SW artifact 113A to edge repository 114A.

Given that environmental descriptors 125 are declarative and intent-based, distribution controller 124A may perform declarative checks as well as possible intent-based checks to reduce if not possibly eliminate human error from resulting in improper distribution of SW artifacts 113. In addition, given the automated nature of the distribution along with maintaining, via environmental descriptors 125, a state of edge repositories 114 in terms of which SW artifacts 113 are to be distributed to which edge repositories 114, software artifact management system 100 may be more robust to failures in secure environments 104 in terms of recovery from malfunctions, hardware failures, power loss, etc.

In addition to generating distribution operations 127A, distribution controller 124A may interface with edge repository 114A to generate a report 129A indicating which of SW artifacts 113 of central repository 112 are stored at edge repository 114A of secure environment 104A. Distribution controller 124A may then transmit report 129A to central repository 112 to ensure that only authorized software artifacts of SW artifacts 113 are stored at edge repository 114. Distribution controller 124 may, in this way, act as an authorized agent that automatically generates reports 129A to ensure that no unauthorized SW artifacts 113 are distributed to secure environments 104 (or side loaded via local storage of software artifacts to edge repositories 114) that may constitute a security threat to secure environments 104.

In the example of FIG. 1A, it is assumed that secure environment 104A represents a test environment (and as such may be referred to for purposes of example as "test environment 104A") while secure environment 104N represents a production environment (and as such may be referred to for purposes of example as "production environment 104N"). As SW artifacts 113 are developed, organizations often require that such SW artifacts 113 are tested in a lab (or a simulated production environment), which test environment 104A may provide (and as such may also be referred to as "lab environment 104A"). After successful testing of SW artifacts 113, the test engineers or other operators of lab environment 104A may authorize software artifacts 113 for distribution to production environment 104N.

To authorize software artifact 113A, for example, for distribution to production environment 104N, the test engineer may interface with distribution controller 124A to modify the environmental descriptor of environment descriptors 125 associated with secure environment 104A (which may be denoted as environmental descriptor 125A) to remove SW artifact 113A. The test engineer may next interface with distribution controller 124A to modify the environmental descriptor of environment descriptors 125 associated with secure environment 104N (which may be denoted as environmental descriptor 125N) to add SW artifact 113A.

In the example of FIG. 1B, distribution controller 124A may generate, responsive to SW artifact 113A being removed from environmental descriptor 125A, updated distribution operations 127A' indicating that SW artifact 113A should be removed from edge repository 114A. Distribution controller 124A may transmit distribution operations 127A' to central repository 112, which may interface with edge repository 114A to delete, based on distribution operations 127A', SW artifact 113A. Once edge repository 114A has deleted software artifact 113A, distribution controller 124A may interface with edge repository 114A to determine which SW artifacts 113 are stored to edge repository 114A so as to generate an updated report 129A'. Distribution controller 124A may transmit updated report 129A' to central repository 112 for similar reasons to those noted above.

In this example, distribution controller 124A may maintain environmental descriptors 125 for more than the secure environment in which distributed controllers 124A resides (i.e., secure environment 104A in the example of FIGS. 1A and 1B). Distribution controller 124A may, for example, maintain environmental descriptor 125N for secure environment 104N. The test engineer may, as noted above, add SW artifact 113A to environmental descriptor 125N, specifying that SW artifact 113A is to be distributed to edge repository 114N of secure environment 104N.

Responsive to updating environmental descriptor 125N, distribution controller 124A may generate one or more distribution operations as updated distribution operations 127A' specifying that SW artifact 113A is to be distributed from central repository 112 to edge repository 114N. Distribution controller 124A may then transmit updated distribution operations 127A' to central repository 112 to cause central repository 112 to distribute (or, in other words, transfer) SW artifact 113A to edge repository 114N of production environment 104N.

Distribution controller 124N may monitor edge repository 114N to determine which of SW artifacts 113 stored to central repository 112 are stored to edge repository 114N. Responsive to central repository 112 distributing software artifact 113A to edge repository 114N, distribution controller 124N may interface with edge repository 114N to determine that SW artifact 113A was successfully stored to edge repository 114N. Distribution controller 124N may generate, responsive to determining that SW artifact 113A was successfully stored to edge repository 114N, a report 129N indicating that software artifact 113A was stored to edge repository 114N of production environment 124N. Distribution controller 124N may transmit report 129N to central repository 112 for reasons similar to those described above with respect to report 129A and updated report 129A'.

In this way, various aspects of the techniques described in this disclosure may allow for automated deployment of SW artifacts 113 across secure environments 104 through use, at least in part, of distribution controller(s) 124 that operate with respect to declarative and intent-based rules referred to as environmental descriptors 125. Environmental descriptors 125 may identify SW artifacts 113 that are to be stored by edge repositories 114 associated with different environments 104, thereby preserving edge repository 114 state that facilitates error recovery, while also providing the user with a declarative, intent-based rule base by which to automate SW artifact 113 distribution across environments 104.

Rather than manually direct software artifact management system 100 to distribute SW artifacts 113 from the central repository 112, the user may define environmental descriptors 125 to gate distribution of SW artifacts 113. In this example, distribution controller 124A may, based on environmental descriptors 125, automatically interface with central repository 112 (via distribution operations 127A/127A') to distribute SW artifact 113A to edge repository 114A. As environmental descriptors 125 are human-readable, the automated process may thereby be documented to facilitate troubleshooting and potentially allow for rapid understanding of the state of edge repositories 114 across environments 104. When moving between environments 104, distribution controllers 125 (in one or more environments 104) may cooperate to transfer SW artifact 113A from central repository 112 to the next software environment (e.g., moving from the test environment to the production environment).

As such, various aspects of the techniques described in this disclosure may improve operation of software artifact management system 100 using distribution controller(s) 124 to automate software artifact distribution across environments 104 by way of central repository 112. The automated nature by which distribution controller(s) 124 may interface with central repository 112 to trigger delivery (or, in other words, distribution) of SW artifacts 113 to different environments 104 may reduce the likelihood of human error, while also potentially enabling the preservation of security for each environment 104 (as distribution controller(s) 124 may operate as an authorized agent in directing distribution of SW artifacts 113 from central repository 112).

Furthermore, the declarative, intent-based rule base by which environmental descriptors 125 are defined may improve traceability for distribution of SW artifacts 113 while also potentially providing a defined state by which distribution controllers 124 may recover from errors in various environments 104. In the instance of an error that corrupts edge repositories 114, distribution controller 124 may, based on environmental descriptors 125, automatically recover from such error by automatically triggering redistribution of SW artifacts 113 to edge repositories 114 of various environments 104.

In this respect, the various aspects of the techniques may improve operation of software artifact management system 100 itself by potentially reducing human error, promoting automated error recovery, supporting software artifact documentation, increasing security, etc. By reducing human error that may result in additional steps to correct such error, automating error recovery to again avoid inadvertent processes, supporting software artifact documentation (via environmental descriptors), and increasing security, the various aspects of the techniques may reduce consumption of computing resources (such as processor cycles, memory, memory bus bandwidth, etc., and associated power consumption) within software artifact distribution system 100 itself.

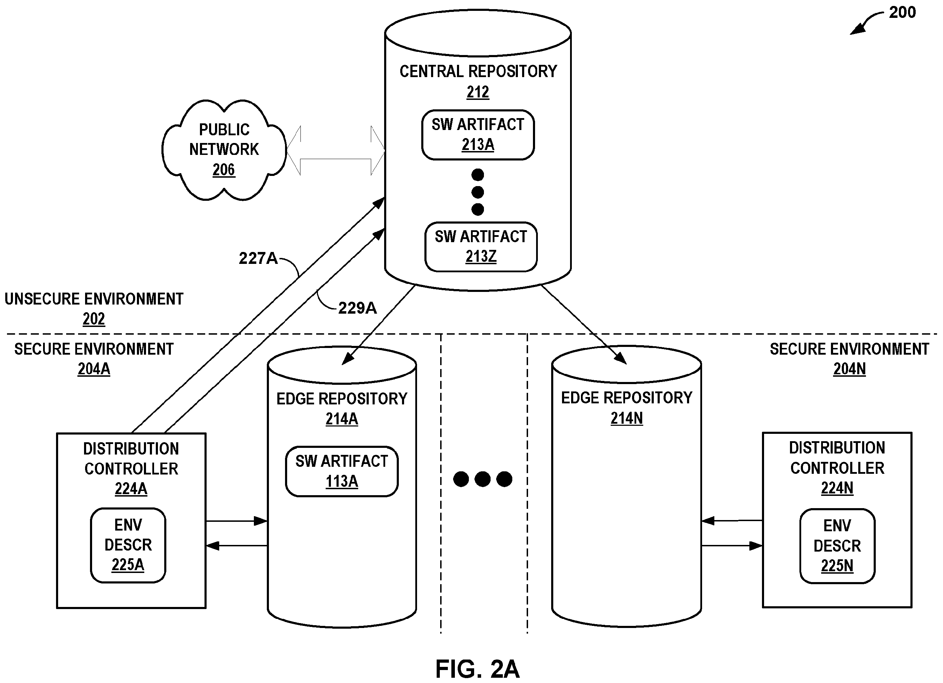

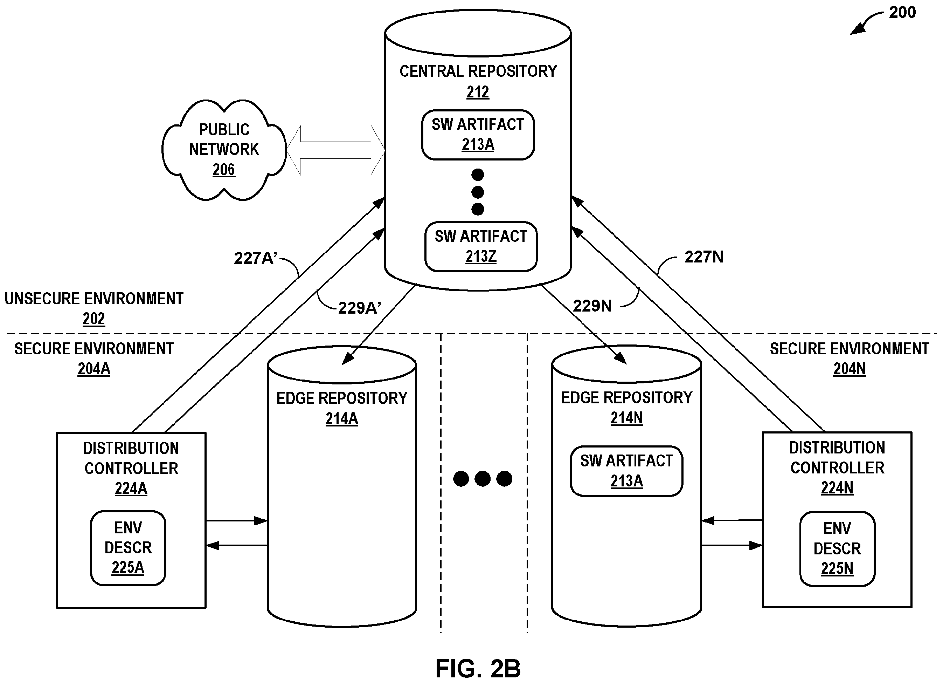

FIGS. 2A and 2B are block diagrams of another example software artifact management system 200 configured to perform various aspects of the inter-environment software artifact management techniques described in this disclosure. Software artifact management system 200 shown in the example of FIG. 2A is similar to, if not substantially the same as, software artifact management system 100 shown in the examples of FIGS. 1A and 1B, except that distribution controllers 224A-224N ("distribution controllers 224") maintain separate environmental descriptors for each respect secure environment 204A-204N ("secure environments 204").

That is, software artifact management system 200, similar to software artifact management system 100, includes a central repository 212 that resides in unsecure environment 202, and a number of different edge repositories 214 that reside in different secure environments 204. Central repository 212 may store SW artifacts 213A-213Z ("SW artifacts 213") similar to central repository 112. Central repository 212 may be publicly accessible via public network 206, which is also similar to, if not the same as, central repository 112. Edge repositories 214 may be similar to, if not the same as, edge repositories 114. Distribution controllers 224 may reside in respective secure environments 204 in a manner similar to distribution controllers 124, managing distribution of SW artifacts 213 from central repository to respective edge repositories 214.

However, rather than have a central distribution controller 124A that maintains a plurality of environmental descriptors 125, each of distribution controllers 124 may maintain a separate environmental descriptor 225A-225N ("environmental descriptors 225") for a corresponding one of secure environments 204. That is, distribution controller 224A may maintain environmental descriptor 225A for edge repository 214A of secure environment 204A, distribution controller 224B may maintain environmental descriptor 225B for edge repository 214B of secure environment 204B, ... , and distribution controller 224N may maintain environmental descriptor 225N for edge repository 214N of secure environment 204N.

In the example of FIG. 2A, distribution controller 224A may generate, based on environmental descriptors 225A, one or more distribution operations 227A specifying that at least one SW artifact (e.g., SW artifact 113A) of SW artifacts 213 are to be distributed to secure environment 204A separate from unsecure environment 202. Distribution controller 224A may then transmit, to central repository 212, distribution operations 227A to cause central repository 212 to transfer (or, in other words, distribute) SW artifact 213A to edge repository 214A in secure environment 204A. Central repository 212 may, responsive to receiving distribution operations 217A, distribute SW artifact 213A to edge repository 214A.

In addition to generating distribution operations 227A, distribution controller 224A may interface with edge repository 214A to generate a report 229A indicating which of SW artifacts 213 of central repository 212 are stored at edge repository 214A of secure environment 204A. Distribution controller 224A may then transmit report 229A to central repository 212 to ensure that only authorized software artifacts of SW artifacts 213 are stored at edge repository 214. Distribution controller 224 may, in this way, act as an authorized agent that automatically generates reports 229A to ensure that no unauthorized SW artifacts 213 are distributed to secure environments 204 (or side loaded via local storage of software artifacts to edge repositories 214) that may constitute a security threat to secure environments 104.

To authorize software artifact 213A, for example, for distribution to production environment 204N, the test engineer may interface with distribution controller 224A to modify environmental descriptor 225A associated with secure environment 204A to remove SW artifact 213A. The test engineer may next communicate with a production engineer to interface with distribution controller 224N to modify environmental descriptor 225N to add SW artifact 213A.

Although described as removing software artifact 213A, in some instances the test engineer may elect to maintain software artifact 213A within secure environment 204A while also being deployed to secure environment 204N. In this respect, software artifact 213A may be specified in both environmental descriptors 225A and 225N.

In the example of FIG. 2B, distribution controller 224A may generate, responsive to SW artifact 213A being removed from environmental descriptor 225A, updated distribution operations 227A' indicating that SW artifact 213A should be removed from edge repository 214A. Distribution controller 224A may transmit distribution operations 227A' to central repository 212, which may interface with edge repository 214A to delete, based on distribution operations 227A', SW artifact 213A. Once edge repository 214A has deleted software artifact 213A, distribution controller 224A may interface with edge repository 214A to determine which SW artifacts 213 are stored to edge repository 214A so as to generate an updated report 229A'. Distribution controller 224A may transmit updated report 229A' to central repository 212 for similar reasons to those noted above.

In this example, distribution controller 224A only maintains environmental descriptor 125A for secure environment 204A in which distributed controllers 224A resides. As such, responsive to updating environmental descriptor 225N, distribution controller 224N may generate one or more distribution operations as distribution operations 227N specifying that SW artifact 213A is to be distributed from central repository 212 to edge repository 214N. Distribution controller 224N may then transmit distribution operations 227N to central repository 212 to cause central repository 212 to distribute (or, in other words, transfer) SW artifact 213A to edge repository 214N of production environment 204N.

Distribution controller 224N may monitor edge repository 214N to determine which of SW artifacts 213 stored to central repository 212 are stored to edge repository 214N. Responsive to central repository 212 distributing software artifact 213A to edge repository 214N, distribution controller 224N may interface with edge repository 214N to determine that SW artifact 213A was successfully stored to edge repository 214N. Distribution controller 224N may generate, responsive to determining that SW artifact 213A was successfully stored to edge repository 214N, a report 229N indicating that software artifact 213A was stored to edge repository 214N of production environment 224N. Distribution controller 224N may transmit report 229N to central repository 212 for reasons similar to those described above with respect to report 229A and updated report 229A'.

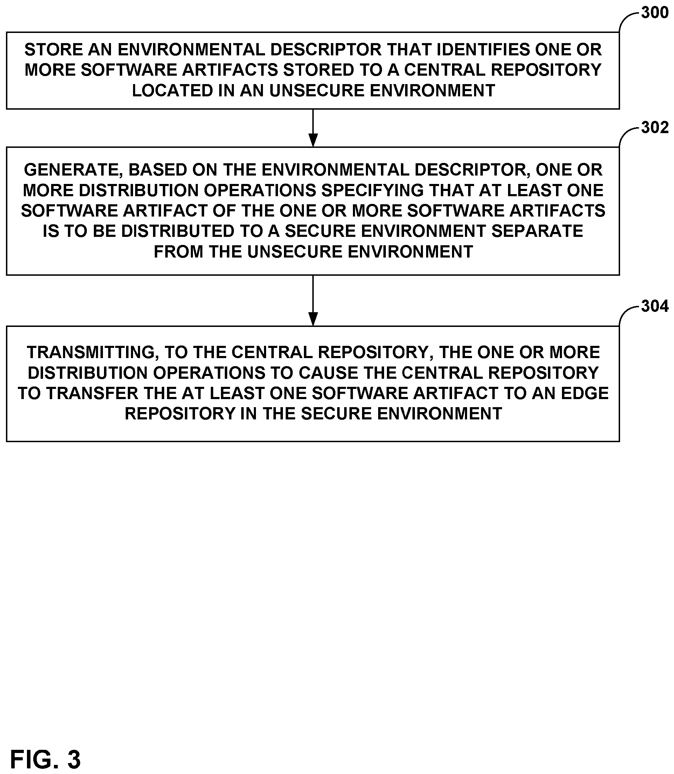

FIG. 3 is a flowchart illustrating example operation of the distribution controller of FIGS. 1A and 1B in performing various aspects of the software artifact management techniques described in this disclosure. Distribution controller 124A may first store environmental descriptors 125 that identifies one or more software artifacts 113 stored to central repository 112 located in unsecure environment 102 (300). Distribution controller 124A may maintain environmental descriptors 125 locally (e.g., stored to edge repository 114A) within secure environment 104A. Distribution controller 124A may store environmental descriptors 125 to prevent unauthorized access to environmental descriptors 125 and thereby improve security.

Distribution controller 124A may next generate, based on environmental descriptors 125, one or more distribution operations 127A specifying that at least one SW artifact (e.g., SW artifact 113A) of SW artifacts 113 are to be distributed to secure environment 104A separate from unsecure environment 102 (302). Distribution controller 124A may then transmit, to central repository 112, distribution operations 127A to cause central repository 112 to transfer (or, in other words, distribute) SW artifact 113A to edge repository 114A in secure environment 104A (304). Central repository 112 may, responsive to receiving distribution operations 117A, distribute SW artifact 113A to edge repository 114A.

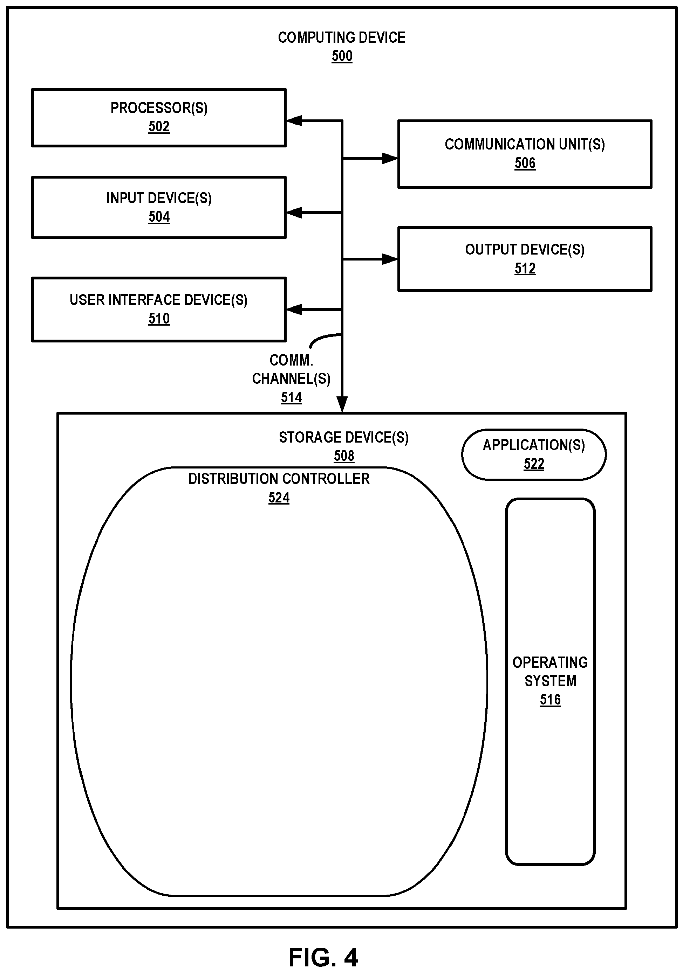

FIG. 4 is a block diagram illustrating further details of one example of a computing device that operates in accordance with one or more techniques of the present disclosure. FIG. 4 may illustrate a particular example of a server or other computing device 500 that includes one or more processor(s) 502 for executing any one or more of distribution controller 524 (which may represent one example of distribution controllers 124/224 discussed above with respect to examples FIG. 1A-2B), or any other component described herein. Other examples of computing device 500 may be used in other instances. Although shown in FIG. 4 as a stand-alone computing device 500 for purposes of example, a computing device may be any component or system that includes one or more processors or other suitable computing environment for executing software instructions and, for example, need not necessarily include one or more elements shown in FIG. 4 (e.g., communication units 506; and in some examples components such as storage device(s) 508 may not be co-located or in the same chassis as other components).

As shown in the example of FIG. 4, computing device 500 includes one or more processors 502, one or more input devices 504, one or more communication units 506, one or more output devices 512, one or more storage devices 508, and user interface (UI) device(s) 510. Computing device 500, in one example, further includes one or more application(s) 522, driver 12, and operating system 516 that are executable by computing device 500. Each of components 502, 504, 506, 508, 510, and 512 are coupled (physically, communicatively, and/or operatively) for inter-component communications. In some examples, communication channels 514 may include a system bus, a network connection, an inter-process communication data structure, or any other method for communicating data. As one example, components 502, 504, 506, 508, 510, and 512 may be coupled by one or more communication channels 514.

Processors 502, in one example, are configured to implement functionality and/or process instructions for execution within computing device 500. For example, processors 502 may be capable of processing instructions stored in storage device 508. Examples of processors 502 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 508 may be configured to store information within computing device 500 during operation. Storage device 508, in some examples, is described as a computer-readable storage medium. In some examples, storage device 508 is a temporary memory, meaning that a primary purpose of storage device 508 is not long-term storage. Storage device 508, in some examples, is described as a volatile memory, meaning that storage device 508 does not maintain stored contents when the computer is turned off. Examples of volatile memories include random access memories (RAM), dynamic random access memories (DRAM), static random access memories (SRAM), and other forms of volatile memories known in the art. In some examples, storage device 508 is used to store program instructions for execution by processors 502. Storage device 508, in one example, is used by software or applications running on computing device 500 to temporarily store information during program execution.

Storage devices 508, in some examples, also include one or more computer-readable storage media. Storage devices 508 may be configured to store larger amounts of information than volatile memory. Storage devices 508 may further be configured for long-term storage of information. In some examples, storage devices 508 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 500, in some examples, also includes one or more communication units 506. Computing device 500, in one example, utilizes communication units 506 to communicate with external devices via one or more networks, such as one or more wired/wireless/mobile networks. Communication units 506 may include a network interface card, such as an Ethernet card, an optical transceiver, a radio frequency transceiver, or any other type of device that can send and receive information. Other examples of such network interfaces may include 3G and WiFi radios. In some examples, computing device 500 uses communication unit 506 to communicate with an external device.

Computing device 500, in one example, also includes one or more user interface devices 510. User interface devices 510, in some examples, are configured to receive input from a user through tactile, audio, or video feedback. Examples of user interface devices(s) 510 include a presence-sensitive display, a mouse, a keyboard, a voice responsive system, video camera, microphone or any other type of device for detecting a command from a user. In some examples, a presence-sensitive display includes a touch-sensitive screen.

One or more output devices 512 may also be included in computing device 500. Output device 512, in some examples, is configured to provide output to a user using tactile, audio, or video stimuli. Output device 512, in one example, includes a presence-sensitive display, a sound card, a video graphics adapter card, or any other type of device for converting a signal into an appropriate form understandable to humans or machines. Additional examples of output device 512 include a speaker, a cathode ray tube (CRT) monitor, a liquid crystal display (LCD), or any other type of device that can generate intelligible output to a user.

Computing device 500 may include operating system 516. Operating system 516, in some examples, controls the operation of components of computing device 500. For example, operating system 516, in one example, facilitates the communication of one or more applications 522 and distribution controller 524 with processors 502, communication unit 506, storage device 508, input device 504, user interface devices 510, and output device 512. Application 522 and distribution controller 524 may also include program instructions and/or data that are executable by computing device 500 to perform various aspects of the techniques described above in more detail.

Therefore, from one perspective, there has been described that a device comprising a processor and a memory may be configured to perform various aspects of the techniques described in this disclosure. A distribution controller configured to support a software artifact management system may comprise a memory and a processor configured to perform the techniques. The memory may store an environmental descriptor that identifies one or more software artifacts stored to a central repository located in an unsecure environment. The processor may generate, based on the environmental descriptor, one or more distribution operations specifying that at least one software artifact of the one or more software artifacts is to be distributed to a secure environment from the unsecure environment. The processor may also transmit, to the central repository, the one or more distribution operations to cause the central repository to transfer the at least one software artifact to the edge repository in the secure environment.

In this respect, the techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium (which may be termed a non-transitory computer-readable medium) and/or a computer-readable transmission medium, comprising instructions. Instructions carried by, conveyed by, embedded in or encoded in a computer-readable medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer-readable storage media. The term "computer-readable storage media" refers to physical storage media, and not signals or carrier waves, although the term "computer-readable media" may include transient media such as signals, in addition to physical storage media. Computer-readable transmission media may include signals such as carrier waves, transmission signals or the like, and may occur between components of a single computer system and/or between plural separate computer systems.

## Claims

1. A method comprising:
storing (300), by a memory of a distribution controller (124) supporting a software artifact management system (100), an environmental descriptor (125) that identifies one or more software artifacts (113) stored to a central repository (112) located in an unsecure environment (102);
generating (302), by one or more processors of the distribution controller and based on the environmental descriptor, one or more distribution operations (127) specifying that at least one software artifact of the one or more software artifacts is to be distributed to a secure environment (104) separate from the unsecure environment, wherein the secure environment comprises a first secure environment of a plurality of secure environments, wherein the first secure environment includes an edge repository (114), wherein the environmental descriptor describes a state of the first secure environment in terms of one or more software artifacts to be distributed to the edge repository, and
wherein the first secure environment includes the distribution controller, and/or
wherein the plurality of secure environments includes a second secure environment different from the first secure environment which includes the distribution controller; and
transmitting (304), by the one or more processors and to the central repository, the one or more distribution operations to cause the central repository to transfer the at least one software artifact to the edge repository in the first secure environment.

2. The method of claim 1,
wherein the first secure environment includes a test environment in which the software artifact is tested, and
wherein the second secure environment include a production environment in which the software artifact is deployed.

3. The method of any combination of claims 1-2,
wherein the second secure environment includes a second edge repository,
wherein the environmental descriptor is a first environmental descriptor of a plurality of environmental descriptors that identify a first one or more software artifacts stored to the central repository that are to be distributed to the first edge repository, and
wherein the plurality of environmental descriptors includes a second environment descriptor that identifies a second one or more software artifacts stored to the central repository that are to be distributed to the second edge repository.

4. The method of claim 3, further comprising:
receiving an update to the first environmental descriptor that removes the at least one software artifact to obtain a first updated environmental descriptor;
receiving an update to the second environmental descriptor that adds the at least one software artifact to obtain a second updated environmental descriptor;
generating, based on the first updated environmental descriptor, a first additional distribution operation specifying that the at least one software artifact is to be removed from the first edge repository;
generating, based on the second updated environmental descriptor, a second additional distribution operation specifying that the at least one software artifact is to be distributed to the second edge repository; and
transmitting the first updated distribution operation and the second updated distribution operation to the central repository.

5. The method of any combination of claims 1-4, further comprising:
interfacing, by the distribution controller, with the edge repository to generate a report indicating which of the one or more software artifacts of the central repository are stored at the edge repository of the secure environment; and
transmitting the report to the central repository to ensure that only authorized software artifacts of the one or more software artifacts are stored at the edge repository.

6. A distribution controller (124) configured to support a software artifact management system (100), the distribution controller comprising:
a memory configured to store an environmental descriptor (125) that identifies one or more software artifacts (113) stored to a central repository (112) located in an unsecure environment (102); and
one or more processors configured to generate, based on the environmental descriptor, one or more distribution operations (127) specifying that at least one software artifact of the one or more software artifacts is to be distributed to a secure environment (104) from the unsecure environment, wherein the secure environment comprises a first secure environment of a plurality of secure environments, wherein the first secure environment includes an edge repository (114), wherein the environmental descriptor describes a state of the first secure environment in terms of one or more software artifacts to be distributed to the edge repository, and
wherein the first secure environment includes the distribution controller, and/or
wherein the plurality of secure environments includes a second secure environment different from the first secure environment which includes the distribution controller; and
transmit, to the central repository, the one or more distribution operations to cause the central repository to transfer the at least one software artifact to the edge repository in the first secure environment.

7. The distribution controller of claim 6, wherein the one or more processors are configured to perform the steps of the method recited by any combination of claims 2-5.

8. A computer-readable medium comprising instructions that, when executed, cause one or more processors of a distribution controller supporting a network artifact management system to perform the steps of the method recited by any combination of claims 1-5.

9. A software artifact management system (100) comprising:
a central repository (112) residing in an unsecure environment (102) and configured to store a plurality of software artifacts (113);
an edge repository (114) residing in a secure environment (104); and
a distribution controller (124) comprising:
a memory configured to store an environmental descriptor (125) that identifies one or more software artifacts of the plurality of software artifacts stored to the central repository; and
one or more processors configured to generate, based on the environmental descriptor, one or more distribution operations (127) specifying that at least one software artifact of the one or more software artifacts is to be distributed to the edge repository from the central repository, wherein the secure environment comprises a first secure environment of a plurality of secure environments, wherein the first secure environment includes the edge repository, wherein the environmental descriptor describes a state of the first secure environment in terms of one or more software artifacts to be distributed to the edge repository, and
wherein the first secure environment includes the distribution controller, and/or
wherein the plurality of secure environments includes a second secure environment different from the first secure environment which includes the distribution controller; and
transmit, to the central repository, the one or more distribution operations to cause the central repository to transfer the at least one software artifact to the edge repository in the first secure environment.

## Patentansprüche

1. Verfahren, umfassend:
Speichern (300), durch einen Speicher einer Verteilungssteuerung (124), die ein Softwareartefakte-Verwaltungssystem (100) unterstützt, eines Umgebungsdeskriptors (125), der ein oder mehrere Softwareartefakte (113) identifiziert, die in einer zentralen Datenablage (112), die sich in einer unsicheren Umgebung (102) befindet, gespeichert sind;
Erzeugen (302), durch einen oder mehrere Prozessoren der Verteilungssteuerung und basierend auf dem Umgebungsdeskriptor, einer oder mehrerer Verteilungsoperationen (127), die festlegen, dass mindestens ein Softwareartefakt der ein oder mehreren Softwareartefakte in eine sichere Umgebung (104), getrennt von der unsicheren Umgebung, verteilt werden soll, wobei die sichere Umgebung eine erste sichere Umgebung von mehreren sicheren Umgebungen umfasst, wobei die erste sichere Umgebung eine Edge-Datenablage (114) aufweist, wobei der Umgebungsdeskriptor einen Zustand der ersten sicheren Umgebung in Bezug auf ein oder mehrere Softwareartefakte beschreibt, die an die Edge-Datenablage verteilt werden sollen, und
wobei die erste sichere Umgebung die Verteilungssteuerung aufweist und/oder
wobei die mehreren sicheren Umgebungen eine zweite sichere Umgebung beinhalten, die von der ersten sicheren Umgebung verschieden ist, die die Verteilungssteuerung aufweist; und
Übertragen (304), durch die ein oder mehreren Prozessoren und an die zentrale Datenablage, der ein oder mehreren Verteiloperationen, um die zentrale Datenablage zu veranlassen, das mindestens eine Softwareartefakt an die Edge-Datenablage in der ersten sicheren Umgebung zu übertragen.

2. Verfahren nach Anspruch 1,
wobei die erste sichere Umgebung eine Prüfumgebung beinhaltet, in der das Softwareartefakt getestet wird, und
wobei die zweite sichere Umgebung eine Produktionsumgebung beinhaltet, in der das Softwareartefakt eingesetzt wird.

3. Verfahren nach einer beliebigen Kombination der Ansprüche 1-2,
wobei die zweite sichere Umgebung eine zweite Edge-Datenablage aufweist,
wobei der Umgebungsdeskriptor ein erster Umgebungsdeskriptor von mehreren Umgebungsdeskriptoren ist, die erste ein oder mehrere Softwareartefakte identifizieren, die in der zentralen Datenablage gespeichert sind und an die erste Edge-Datenablage verteilt werden sollen, und
wobei die mehreren Umgebungsdeskriptoren einen zweiten Umgebungsdeskriptor beinhalten, der zweite ein oder mehrere Softwareartefakte identifiziert, die in der zentralen Datenablage gespeichert sind und an die zweite Edge-Datenablage verteilt werden sollen.

4. Verfahren nach Anspruch 3, ferner umfassend:
Empfangen einer Aktualisierung des ersten Umgebungsdeskriptors, die das mindestens eine Softwareartefakt entfernt, um einen ersten aktualisierten Umgebungsdeskriptor zu erhalten;
Empfangen einer Aktualisierung des zweiten Umgebungsdeskriptors, die das mindestens eine Softwareartefakt hinzufügt, um einen zweiten aktualisierten Umgebungsdeskriptor zu erhalten;
Generieren, basierend auf dem ersten aktualisierten Umgebungsdeskriptor, einer ersten zusätzlichen Verteiloperation, die festlegt, dass das mindestens eine Softwareartefakt aus der ersten Edge-Datenablage entfernt werden soll;
Generieren, basierend auf dem zweiten aktualisierten Umgebungsdeskriptor, einer zweiten zusätzlichen Verteiloperation, die festlegt, dass das mindestens eine Softwareartefakt an die zweite Edge-Datenablage verteilt werden soll;
Übertragen der ersten aktualisierten Verteiloperation und der zweiten aktualisierten Verteiloperation an die zentrale Datenablage.

5. Verfahren nach einer beliebigen Kombination der Ansprüche 1-4, ferner Folgendes umfassend:
Zusammenwirken, durch die Verteilungssteuerung, mit der Edge-Datenablage, um einen Bericht zu erstellen, der angibt, welche der ein oder mehreren Softwareartefakte der zentralen Datenablage in der Edge-Datenablage der sicheren Umgebung gespeichert sind; und
Übertragen des Berichts an die zentrale Datenablage, um sicherzustellen, dass nur autorisierte Softwareartefakte der ein oder mehreren Softwareartefakte in der Edge-Datenablage gespeichert sind.

6. Verteilungssteuerung (124), die dazu ausgelegt ist, ein Softwareartefakte-Verwaltungssystem (100) zu unterstützen, wobei die Verteilungssteuerung umfasst:
einen Speicher, der dazu ausgelegt ist, einen Umgebungsdeskriptor (125) zu speichern, der ein oder mehrere Softwareartefakte (113) identifiziert, die in einer zentralen Datenablage (112) gespeichert sind, die sich in einer unsicheren Umgebung (102) befindet; und
einen oder mehrere Prozessoren, die dazu ausgelegt sind, basierend auf dem Umgebungsdeskriptor eine oder mehrere Verteilungsoperationen (127) zu generieren, die festlegen, dass mindestens ein Softwareartefakt der ein oder mehreren Softwareartefakte aus der unsicheren Umgebung an eine sichere Umgebung (104) verteilt werden soll, wobei die sichere Umgebung eine erste sichere Umgebung von mehreren sicheren Umgebungen umfasst, wobei die erste sichere Umgebung eine Edge-Datenablage (114) aufweist, wobei der Umgebungsdeskriptor einen Zustand der ersten sicheren Umgebung in Bezug auf ein oder mehrere Softwareartefakte beschreibt, die an die Edge-Datenablage verteilt werden sollen, und
wobei die erste sichere Umgebung die Verteilungssteuerung aufweist und/oder
wobei die mehreren sicheren Umgebungen eine zweite sichere Umgebung beinhalten, die von der ersten sicheren Umgebung verschieden ist, die die Verteilungssteuerung aufweist; und
Übertragen, an die zentrale Datenablage, der ein oder mehreren Verteiloperationen, um die zentrale Datenablage zu veranlassen, das mindestens eine Softwareartefakt an die Edge-Datenablage in der ersten sicheren Umgebung zu übertragen.

7. Verteilungssteuerung nach Anspruch 6, wobei die ein oder mehreren Prozessoren dazu ausgelegt sind, die Schritte des Verfahrens nach einer beliebigen Kombination der Ansprüche 2-5 durchzuführen.

8. Computerlesbares Medium, umfassend Anweisungen, die, wenn sie ausgeführt werden, einen oder mehrere Prozessoren einer Verteilungssteuerung, die ein Softwareartefakte-Verwaltungssystem unterstützt, veranlassen, das Verfahren nach einer beliebigen Kombination der Ansprüche 1-5 durchzuführen.

9. Softwareartefakte-Verwaltungssystem (100), umfassend:
eine zentrale Datenablage (112), die sich in einer unsicheren Umgebung (102) befindet und dazu ausgelegt ist, mehrere Softwareartefakte (113) zu speichern;
eine Edge-Datenablage (114), die sich in einer sicheren Umgebung (104) befindet; und
eine Verteilungssteuerung (124), umfassend:
einen Speicher, der dazu ausgelegt ist, einen Umgebungsdeskriptor (125) zu speichern, der ein oder mehrere Softwareartefakte der mehreren Softwareartefakte identifiziert, die in der zentralen Datenablage gespeichert sind; und
einen oder mehrere Prozessoren, die dazu ausgelegt sind, basierend auf dem Umgebungsdeskriptor eine oder mehrere Verteilungsoperationen (127) zu generieren, die festlegen, dass mindestens ein Softwareartefakt der ein oder mehreren Softwareartefakte aus der zentralen Datenablage an die Edge-Datenablage verteilt werden soll, wobei die sichere Umgebung eine erste sichere Umgebung von mehreren sicheren Umgebungen umfasst, wobei die erste sichere Umgebung die Edge-Datenablage aufweist, wobei der Umgebungsdeskriptor einen Zustand der ersten sicheren Umgebung in Bezug auf ein oder mehrere Softwareartefakte beschreibt, die an die Edge-Datenablage verteilt werden sollen, und
wobei die erste sichere Umgebung die Verteilungssteuerung aufweist und/oder
wobei die mehreren sicheren Umgebungen eine zweite sichere Umgebung beinhalten, die von der ersten sicheren Umgebung verschieden ist, die die Verteilungssteuerung aufweist; und
Übertragen, an die zentrale Datenablage, der ein oder mehreren Verteiloperationen, um die zentrale Datenablage zu veranlassen, das mindestens eine Softwareartefakt an die Edge-Datenablage in der ersten sicheren Umgebung zu übertragen.

## Revendications

1. Procédé comprenant les étapes suivantes :
stocker (300), par une mémoire d'un contrôleur de distribution (124) supportant un système de gestion d'artefacts logiciels (100), un descripteur environnemental (125) qui identifie un ou plusieurs artefacts logiciels (113) stockés dans un dépôt central (112) situé dans un environnement non sécurisé (102) ;
générer (302), par un ou plusieurs processeurs du contrôleur de distribution et sur la base du descripteur environnemental, une ou plusieurs opérations de distribution (127) spécifiant qu'au moins un artefact logiciel des un ou plusieurs artefacts logiciels doit être distribué à un environnement sécurisé (104) distinct de l'environnement non sécurisé, l'environnement sécurisé comprenant un premier environnement sécurisé d'une pluralité d'environnements sécurisés, le premier environnement sécurisé comprenant un dépôt périphérique (114), où le descripteur environnemental décrit un état du premier environnement sécurisé en termes d'un ou plusieurs artefacts logiciels à distribuer au dépôt périphérique, et
où le premier environnement sécurisé comporte le contrôleur de distribution, et/ou
où la pluralité d'environnements sécurisés comprend un deuxième environnement sécurisé différent du premier environnement sécurisé qui comprend le contrôleur de distribution ; et
transmettre (304), par les un ou plusieurs processeurs et vers le dépôt central, les une ou plusieurs opérations de distribution pour amener le dépôt central à transférer les un ou plusieurs artefacts logiciels au dépôt périphérique dans le premier environnement sécurisé.

2. Procédé selon la revendication 1,
dans lequel le premier environnement sécurisé comprend un environnement de test dans lequel l'artefact logiciel est testé, et
dans lequel le deuxième environnement sécurisé comprend un environnement de production dans lequel l'artefact logiciel est déployé.

3. Procédé selon une combinaison quelconque des revendications 1 et 2,
dans lequel le deuxième environnement sécurisé comprend un deuxième dépôt périphérique,
dans lequel le descripteur environnemental est un premier descripteur environnemental d'une pluralité de descripteurs environnementaux qui identifient un premier ou plusieurs artefacts logiciels stockés dans le dépôt central qui doivent être distribués au premier dépôt périphérique, et
dans lequel la pluralité de descripteurs environnementaux comprend un deuxième descripteur environnemental qui identifie un deuxième ou plusieurs artefacts logiciels stockés dans le dépôt central qui doivent être distribués au deuxième dépôt périphérique.

4. Procédé selon la revendication 3, comprenant en outre les étapes suivantes :
recevoir une mise à jour du premier descripteur environnemental qui retire l'au moins un artefact logiciel pour obtenir un premier descripteur environnemental mis à jour ;
recevoir une mise à jour du deuxième descripteur environnemental qui ajoute l'au moins un artefact logiciel pour obtenir un deuxième descripteur environnemental mis à jour ;
générer, sur la base du premier descripteur environnemental mis à jour, une première opération de distribution supplémentaire spécifiant que l'au moins un artefact logiciel doit être retiré du premier dépôt périphérique ;
générer, sur la base du deuxième descripteur environnemental mis à jour, une deuxième opération de distribution supplémentaire spécifiant que l'au moins un artefact logiciel doit être distribué au deuxième dépôt périphérique ; et
transmettre la première opération de distribution mise à jour et la deuxième opération de distribution mise à jour au dépôt central.

5. Procédé selon une combinaison quelconque des revendications 1 à 4, comprenant en outre les étapes suivantes :
s'interfacer, par le contrôleur de distribution, avec le dépôt périphérique pour générer un rapport indiquant lesquels des un ou plusieurs artefacts logiciels du dépôt central sont stockés dans le dépôt périphérique de l'environnement sécurisé ; et
transmettre le rapport au dépôt central pour s'assurer que seuls les artefacts logiciels autorisés des un ou plusieurs artefacts logiciels sont stockés au niveau du dépôt périphérique.

6. Contrôleur de distribution (124) configuré pour supporter un système (100) de gestion d'artefacts logiciels, le contrôleur de distribution comprenant :
une mémoire configurée pour stocker un descripteur environnemental (125) qui identifie un ou plusieurs artefacts logiciels (113) stockés dans un dépôt central (112) situé dans un environnement non sécurisé (102) ; et
un ou plusieurs processeurs configurés pour générer, sur la base du descripteur environnemental, une ou plusieurs opérations de distribution (127) spécifiant qu'au moins un artefact logiciel des un ou plusieurs artefacts logiciels doit être distribué à un environnement sécurisé (104) depuis l'environnement non sécurisé, l'environnement sécurisé comprenant un premier environnement sécurisé d'une pluralité d'environnements sécurisés, le premier environnement sécurisé comprenant un dépôt périphérique (114), où le descripteur environnemental décrit un état du premier environnement sécurisé en termes d'un ou plusieurs artefacts logiciels à distribuer au dépôt périphérique, et
où le premier environnement sécurisé comporte le contrôleur de distribution, et/ou
où la pluralité d'environnements sécurisés comprend un deuxième environnement sécurisé différent du premier environnement sécurisé qui comprend le contrôleur de distribution ; et
transmettre, vers le dépôt central, les une ou plusieurs opérations de distribution pour amener le dépôt central à transférer les un ou plusieurs artefacts logiciels au dépôt périphérique dans le premier environnement sécurisé.

7. Contrôleur de distribution selon la revendication 6, dans lequel les un ou plusieurs processeurs sont configurés pour exécuter les étapes du procédé décrit par une combinaison quelconque des revendications 2 à 5.

8. Support de stockage lisible par ordinateur comprenant des instructions qui, lorsqu'elles sont exécutées, amènent un ou plusieurs processeurs d'un contrôleur de distribution supportant un système de gestion d'artéfacts de réseau à réaliser les étapes du procédé décrit par une combinaison quelconque des revendications 1 à 5.

9. Système de gestion d'artéfacts logiciels (100) comprenant :
un dépôt central (112) résidant dans un environnement non sécurisé (102) et configuré pour stocker une pluralité d'artefacts logiciels (113) ;
un dépôt périphérique (114) résidant dans un environnement sécurisé (104) ; et
un contrôleur de distribution (124) comprenant :
une mémoire configurée pour stocker un descripteur environnemental (125) qui identifie un ou plusieurs artefacts logiciels de la pluralité d'artefacts logiciels stockés dans le dépôt central ; et
un ou plusieurs processeurs configurés pour générer, sur la base du descripteur environnemental, une ou plusieurs opérations de distribution (127) spécifiant qu'au moins un artefact logiciel des un ou plusieurs artefacts logiciels doit être distribué au dépôt périphérique à partir du dépôt central, l'environnement sécurisé comprenant un premier environnement sécurisé d'une pluralité d'environnements sécurisés, le premier environnement sécurisé comprenant le dépôt périphérique, où le descripteur environnemental décrit un état du premier environnement sécurisé en termes d'un ou plusieurs artefacts logiciels à distribuer au dépôt périphérique, et
où le premier environnement sécurisé comporte le contrôleur de distribution, et/ou
où la pluralité d'environnements sécurisés comprend un deuxième environnement sécurisé différent du premier environnement sécurisé qui comprend le contrôleur de distribution ; et
transmettre, vers le dépôt central, les une ou plusieurs opérations de distribution pour amener le dépôt central à transférer les un ou plusieurs artefacts logiciels au dépôt périphérique dans le premier environnement sécurisé.
